(19) Europäisches Patentamt
European Patent Office
Office européen des brevets

(11) **EP 4 757 220 A1**

(12) **EUROPEAN PATENT APPLICATION**

(43) Date of publication:
**10.06.2026 Bulletin 2026/24**

(21) Application number: **25208554.3**

(22) Date of filing: **14.10.2025**

(51) International Patent Classification (IPC):
**H04L 1/00** (2006.01)

(52) Cooperative Patent Classification (CPC):
**H04L 1/0003**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **09.12.2024 CN 202411803140**

(71) Applicant: **Rohde & Schwarz GmbH & Co. KG 81671 München (DE)**

(72) Inventors:
• WANG, Lilei
  Beijing, 100012 (CN)
• SCHLIENZ, Juergen
  81671 München (DE)

(74) Representative: **Prinz & Partner mbB Patent- und Rechtsanwälte Rundfunkplatz 2 80335 München (DE)**

(54) **SPEED-BASED TRANSMISSION SCHEME SWITCHING METHOD, COMMUNICATION SYSTEM, AND TEST AND/OR MEASUREMENT SYSTEM**

(57) A speed-based transmission scheme switching method of switching a transmission scheme between a transmitter node (12) and a receiver node (14) is described. The speed-based transmission scheme switching method comprises the steps of
- determining at least one speed parameter, wherein the at least one speed parameter comprises a speed of the transmitter node (12), a speed of the receiver node (14), and/or a relative speed between the transmitter node (12) and the receiver node (14); and
- switching, based on the at least one speed parameter determined, between a first transmission scheme being associated with a lower range of the at least one speed parameter and a second transmission scheme being associated with a higher range of the at least one speed parameter.

Further, a communication system (10) as well as a test and/or measurement system are described.

**Fig. 1**

**Description**

The present invention generally relates to a speed-based transmission scheme switching method. The present invention further relates to a communication system, as well as to a test and/or measurement system.

Wireless communication is based on a modulation that is applied to a radio frequency, RF, signal according to a predetermined modulation scheme, wherein the predetermined modulation scheme is used by both a transmitter node and a receiver node.

In general, the modulation applied needs to ensure that data comprised in the modulated RF signal is correctly transmitted from a transmitter node to the receiver node while being as insensitive to distortions as possible in order to ensure a low symbol error rate.

For example, such distortions can be caused by the Doppler effect due to a relative movement of the transmitter node and the receiver node.

Thus, the object of the present invention is to provide a method, a communication system, as well as a test and/or measurement system that provide enhanced robustness against distortions induced by the Doppler effect.

According to the present invention, the problem is solved by a speed-based transmission scheme switching method of switching a transmission scheme between a transmitter node and a receiver node. The speed-based transmission scheme switching method comprises the steps of

- determining at least one speed parameter, wherein the at least one speed parameter comprises a speed of the transmitter node, a speed of the receiver node, and/or a relative speed between the transmitter node and the receiver node; and

- switching, based on the at least one speed parameter determined, between a first transmission scheme being associated with a lower range of the at least one speed parameter and a second transmission scheme being associated with a higher range of the at least one speed parameter.

Therein and hereinafter, the term "node" is understood to denote an electronic circuit, an electronic device or several interoperating electronic devices that is/are configured to communicate with other nodes via wireless RF signals. More precisely, each node may be configured to generate, transmit, and/or receive modulated RF signals that comprise a symbol sequence that is modulated onto the RF signals by means of a certain modulation technique.

The term "transmission scheme" is understood to denote a series of signal modifications that are applied to an RF signal in order to modulate the symbol sequence onto the RF signal and/or in order to recover the symbol sequence from the modulated RF signal. Accordingly, the transmission scheme comprises a modulation scheme that is applied to the RF signal. Moreover, the transmission scheme may comprise a data coding scheme.

The speed-based transmission scheme switching method according to the present invention is based on the idea to dynamically switch between different transmission schemes based on the speed of the transmitter node, the speed of the receiver node, and/or the relative speed between the transmitter node and the receiver node.

Different transmission schemes typically provide different performance with different relative speeds between the transmitter node and the receiver node, i.e. one transmission scheme may perform better at lower relative speeds while another transmission scheme may perform better at higher relative speeds.

According to the present invention, the better-performing transmission scheme is dynamically chosen for communication between the transmitter node and the receiver node based on the at least one speed parameter determined.

Thus, optimal communication performance is ensured for all ranges of the relative speed between the transmitter node and the receiver node with the speed-based transmission scheme switching method according to the present invention.

According to an aspect of the present invention, a switch from the first transmission scheme to the second transmission scheme is performed if the at least one speed parameter determined is greater than a first speed threshold. More precisely, the switch from the first transmission scheme to the second transmission scheme may be performed if the at least one speed parameter determined increases from a region below the first speed threshold to a region above the first speed threshold.

Therein, the first speed threshold may be located in a speed region where the second transmission scheme outperforms the first transmission scheme.

The first speed threshold may be chosen based on a comparison of the performance of the transmitter node and/or of the receiver node at different speeds using the first transmission scheme and the second transmission scheme.

In an exemplary embodiment of the present invention, a switch from the second transmission scheme to the first transmission scheme is performed if the at least one speed parameter determined is smaller than a second speed threshold. More precisely, the switch from the second transmission scheme to the first transmission scheme may be performed if the at least one speed parameter determined decreases from a region above the second speed threshold to a region below the second speed threshold.

Therein, the second speed threshold may be located in a speed region where the first transmission scheme outperforms the second transmission scheme.

The second speed threshold may be chosen based on a comparison of the performance of the transmitter node and/or of the receiver node at different speeds using the first transmission scheme and the second transmission scheme.

An aspect of the present invention provides that the first speed threshold is greater than the second speed threshold. This way, it is ensured that the switch form the first transmission scheme to the second transmission scheme or vice versa is only performed if there is a tangible performance increase after switching the transmission scheme.

Moreover the speed thresholds being different from each other ensures that the transmission scheme is not switched repeatedly if the at least one speed parameter has a value around the first speed threshold or the second speed threshold and varies slightly.

However, it is noted that the first speed threshold and the second speed threshold could, in principle, also be chosen to be equal.

In a further embodiment of the present invention, the first transmission scheme is an orthogonal frequency division multiplexing, OFDM, scheme. OFDM schemes provide particularly high performance at lower relative speeds between the transmitter node and the receiver node, particularly in the range below the second speed threshold.

For example, the first transmission scheme may be a Cyclic Prefix-Orthogonal Frequency Division Multiplexing (CP-OFDM) scheme or a Discrete Fourier Transform-Spread Orthogonal Frequency Division Multiplexing (DFT-S-OFDM) scheme.

According to another aspect of the present invention, the second transmission scheme is an orthogonal time-frequency-space, OTFS, scheme or a orthogonal time-frequency multiplexing, OTFM, scheme. OTFS schemes and OTFM schemes provide particularly high performance at higher relative speeds between the transmitter node and the receiver node, particularly in the range above the first speed threshold.

An aspect of the present invention provides that a full modulation coding scheme, MCS, table is utilized in the first transmission scheme.

In general, the MCS table reflects parameters of the wireless connection between the transmitter node and the receiver node.

More precisely, the MCS table comprises a plurality of different combinations of modulation schemes and coding schemes, as well as the associated parameters. For example, the MCS table comprises a modulation order, a target code rate, and/or a spectral efficiency.

Based on the MCS table, the transmitter node and the receiver node can select a combination of a modulation scheme and a coding scheme.

In the first transmission scheme, there may be no restrictions, such that the full MCS table may be utilized by the transmitter node and the receiver node.

In an exemplary embodiment of the present invention, an adapted modulation coding scheme, MCS, table is utilized in the second transmission scheme. In other words, a different MCS table may be provided for the second transmission scheme. This way, it is ensured that only the appropriate combinations of modulation schemes and coding schemes can be selected by the transmitter node and the receiver node while employing the second transmission scheme.

The adapted MCS table may be a reduced version of a full MCS table or a separate MCS table having different properties compared to the full MCS table. It has turned out that the performance of the transmitter node and/or the receiver node can be enhanced while using the second transmission scheme if a reduced MCS table or a separate MCS table having a reduced number of combinations of modulation schemes and coding schemes is utilized in the second transmission scheme.

For example, the adapted MCS table may have a reduced modulation order, reduced coding rate, and/or finer granularity with respect to e.g. the coding rate, the error correction rate, the transport block size, etc. It has turned out that the performance of the transmitter node and/or of the receiver node can be enhanced significantly if such an adapted MCS table is utilized.

In a further embodiment of the present invention, only continuous resource allocation in frequency domain is utilized in the second transmission scheme. In other words, subsequent subcarriers in frequency domain are all utilized for the second transmission scheme. It has turned out that the performance of the transmitter node and/or of the receiver node in the second transmission scheme can be enhanced significantly when continuous resource allocation in frequency domain is applied.

Accordingly, no blank subcarriers may be inserted between the subcarriers allocated to the second transmission scheme.

Likewise, there may be no subcarriers allocated to a different transmission scheme between two subcarriers allocated to the second transmission scheme, particularly no subcarriers allocated to the first transmission scheme.

According to an aspect of the present invention, both the transmitter node and the receiver node automatically switch between the first transmission scheme and the second transmission scheme based on the at least one speed parameter determined.

Therein, the at least one speed parameter may be determined by the receiver node and/or by the transmitter node.

If the at least one speed parameter is determined only by the receiver node, the at least one speed parameter may be transmitted to the transmitter node by the receiver node.

If the at least one speed parameter is determined only by the transmitter node, the at least one speed parameter may be transmitted to the receiver node by the transmitter node.

In another embodiment of the present invention, the transmitter node initiates the switching between the first transmission scheme and the second transmission scheme. Accordingly, the transmitter node decides whether the transmission scheme is to be switched.

The transmitter node may transmit a scheme switching instruction message to the receiver node, and the receiver node may switch between the first transmission scheme and the second transmission scheme based on the scheme switching instruction message.

Therein, the transmitter node may determine the at least one speed parameter.

However, it is also conceivable that the receiver node may determine the at least one speed parameter and may transmit the at least one speed parameter determined to the transmitter node.

In a further exemplary embodiment of the present invention, the receiver node initiates the switching between the first transmission scheme and the second transmission scheme. Accordingly, the receiver node decides whether the transmission scheme is to be switched.

The receiver node may transmit a scheme switching instruction message to the transmitter node, and the transmitter node may switch between the first transmission scheme and the second transmission scheme based on the scheme switching instruction message.

Therein, the receiver node may determine the at least one speed parameter.

However, it is also conceivable that the transmitter node may determine the at least one speed parameter and may transmit the at least one speed parameter determined to the receiver node.

According to the present invention, the problem further is solved by a communication system. The communication system comprises a transmitter node and a receiver node, wherein the communication system is configured to perform the speed-based transmission scheme switching method according to any one of the variants described above.

Regarding the advantages and further properties of the communication system, reference is made to the explanations given above with respect to the speed-based transmission scheme switching method, which also hold for the communication system and vice versa.

According to the present invention, the problem further is solved by a test and/or measurement system. The test and/or measurement system comprises an emulation module and an analysis module. The emulation module is configured to emulate a transmitter node or a receiver node in order to perform tests and/or measurements on a device under test. The emulation module is configured to perform the speed-based transmission scheme switching method according to any one of the variants described above in conjunction with the device under test. The analysis module is configured to determine at least one performance parameter of the device under test, wherein the at least one performance parameter is associated with the device under test switching between the first transmission scheme and the second transmission scheme.

Therein and in the following, the term "module" is understood to describe suitable hardware, suitable software, or a combination of hardware and software that is configured to have a certain functionality.

The hardware may, inter alia, comprise a CPU, a GPU, an FPGA, an ASIC, or other types of electronic circuitry.

The at least one performance parameter may, for example, comprise a bit error rate, a symbol error rate, a signal-to-noise ratio, a switching time taken by the device under test to switch the transmission scheme, and/or a parameter indicating whether the switch between the transmission schemes has been performed correctly by the device under test.

The foregoing aspects and many of the attendant advantages of the claimed subject matter will become more readily appreciated as the same become better understood by reference to the following detailed description, when taken in conjunction with the accompanying drawings, wherein:

- Figure 1 schematically shows a communication system according to the present invention;

- Figure 2 schematically shows a portion of the communication system of Figure 1 in more detail;

- Figure 3 shows a flow chart of a speed-based transmission scheme switching method according to the present invention;

- Figure 4 shows a diagram of speed parameter plotted against time illustrating steps of the method of Figure 3;

- Figure 5 shows a plot of a bit error rate of several different transmission schemes at different Doppler-induced frequency shifts against a signal-to-noise ratio;

- Figure 6 shows a plot of a bit error rate of several different transmission schemes at different modulation orders against a signal-to-noise ratio;

- Figure 7 shows an exemplary modulation coding scheme table;

- Figure 8 shows a plot of a bit error rate of a transmission scheme with different resource allocation schemes against a signal-to-noise ratio; and

- Figure 9 schematically shows a test and/or measurement system according to the present invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

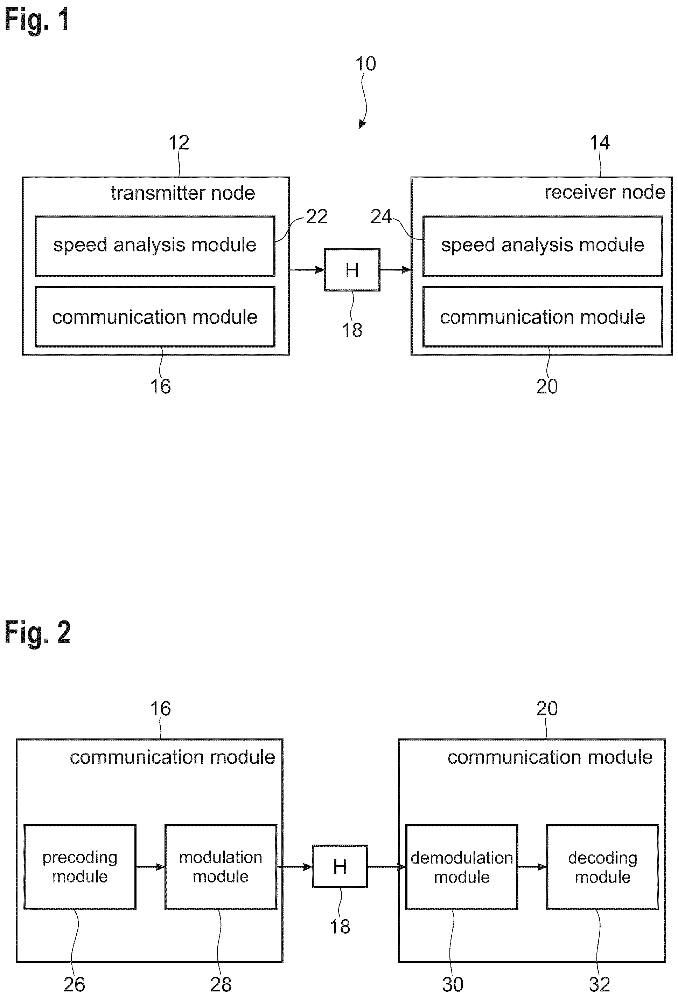

Figure 1 schematically shows a communication system 10 that comprises a transmitter node 12 and a receiver node 14.

In general, the transmitter node 12 and the receiver node 14 are configured to communicate with each other via wireless RF signals based on a certain wireless communication standard such as WLAN, 4G or 5G.

More precisely, the transmitter node 12 comprises a communication module 16 that may be configured to generate and transmit a modulated RF signal that comprises a symbol sequence that is modulated onto the RF signal by means of a certain modulation technique.

The modulated RF signal is transmitted over a transmission path 18 that has a certain transfer function H.

The receiver node 14 comprises a communication module 20 that is configured to receive and demodulate the modulated RF signal received via the transmission path 18.

It is noted that the transmitter node 12 and/or the receiver node 14 may be established as a transceiver, i.e. the transmitter node 12 and/or the receiver node 14 may be configured to both transmit and receive modulated RF signals.

For example, the transmitter node 12 may be a user equipment (UE) device, such as a smartphone, a tablet, a handheld radio, or any other type of UE device being configured for wireless communication.

As a further example, the receiver node 14 may be a base station.

However, it is also conceivable that the receiver node 14 may be a UE device and/or that the transmitter node 12 may be a base station.

In the exemplary embodiment shown in Figure 1, the transmitter node 12 comprises a speed analysis module 22. Moreover, the receiver node 14 also comprises a speed analysis module 24.

However, it is to be understood that, alternatively, only the speed analysis module 22 of the transmitter node 12 or the only the speed analysis module of the receiver node 14 may be provided.

In general, the speed analysis modules 22, 24 are configured to determine at least one speed parameter associated with the transmitter node 12 and/or with the receiver node 14, as will be described in more detail below.

Figure 2 schematically shows an exemplary embodiment of a portion of the communication system 10, the portion comprising a portion of the communication module 16 of the transmitter node 12, the transmission path 18, and a portion of the communication module 20 of the receiver node 14.

The communication module 16 of the transmitter node 12 comprises a precoding module 26 and a modulation module 28 that is provided downstream of the precoding module 26.

The communication module 20 of the receiver node 14 comprises a demodulation module 30 and a decoding module 32 that is provided downstream of the demodulation module 30.

It is noted that the communication modules 16, 20 may comprise further components that are not shown in Figure 2.

Particularly, further components may be provided upstream of the precoding module 26.

Likewise, further components may be provide downstream of the decoding module 32.

In general, the communication module 16 of the transmitter node 12 and the communication module 20 of the receiver node 14 are configured to selectively employ one of at least two different transmission schemes.

Therein, the at least two different transmission schemes comprise a first transmission scheme that has higher performance at lower relative speeds between the transmitter node 12 and the receiver node 14, as well as a second transmission scheme that has higher performance at higher relative speeds between the transmitter node 12 and the receiver node 14.

For example, the first transmission scheme may be an orthogonal frequency division multiplexing (OFDM) scheme, particularly a Cyclic Prefix-Orthogonal Frequency Division Multiplexing (CP-OFDM) scheme or a Discrete Fourier Transform-Spread Orthogonal Frequency Division Multiplexing (DFT-S-OFDM) scheme.

The second transmission scheme may be an orthogonal time-frequency-space (OTFS) scheme or a orthogonal time-frequency multiplexing (OTFM) scheme.

Therein, the ability to use the second transmission scheme may be provided on top of the ability to use the first transmission scheme.

In the exemplary case of Figure 2, the OFDM scheme may be performed by the modulation module 28 and the demodulation module 30, i.e. the precoding module 26 and the decoding module 32 may be inactive.

In other words, in the first transmission mode, only the modulation module 28 and the demodulation module 30 may be active, wherein the OFDM modulation is performed according to an arbitrary variant known in the state of the art.

In the second transmission scheme, which is e.g. an OTFS scheme, the precoding module 26 and the decoding module 32 may be activated.

Therein, the precoding module 26 may perform an Inverse Symplectic Fast Fourier Transform (ISFFT) from the delay-Doppler-domain into the time-frequency domain.

The ISFFT is defined by

$$X[n, m] = \frac{1}{\sqrt{NM}} \sum_{k=0}^{N-1} \sum_{l=0}^{M-1} x[k, l] e^{j2\pi \left( \frac{nk}{N} - \frac{ml}{M} \right)}$$

The decoding module 32 may perform a Symplectic Fast Fourier Transform (SFFT) from the time-frequency domain to the delay-Doppler-domain.

The SFFT is defined by

$$y[k, l] = \frac{1}{\sqrt{NM}} \sum_{n=0}^{N-1} \sum_{m=0}^{M-1} Y[n, m] e^{-j2\pi \left( \frac{nk}{N} - \frac{ml}{M} \right)}$$

Therein, x[k,l] is the signal in delay-Doppler domain, while X[n,m] is the signal in the time-frequency domain Using the implementation shown in Figure 2, the first transmission scheme and the second transmission scheme are allowed to coexist.

The whole slot/frame may be based on the first transmission scheme, and the resources of the second transmission scheme may be part of the whole slot/frame.

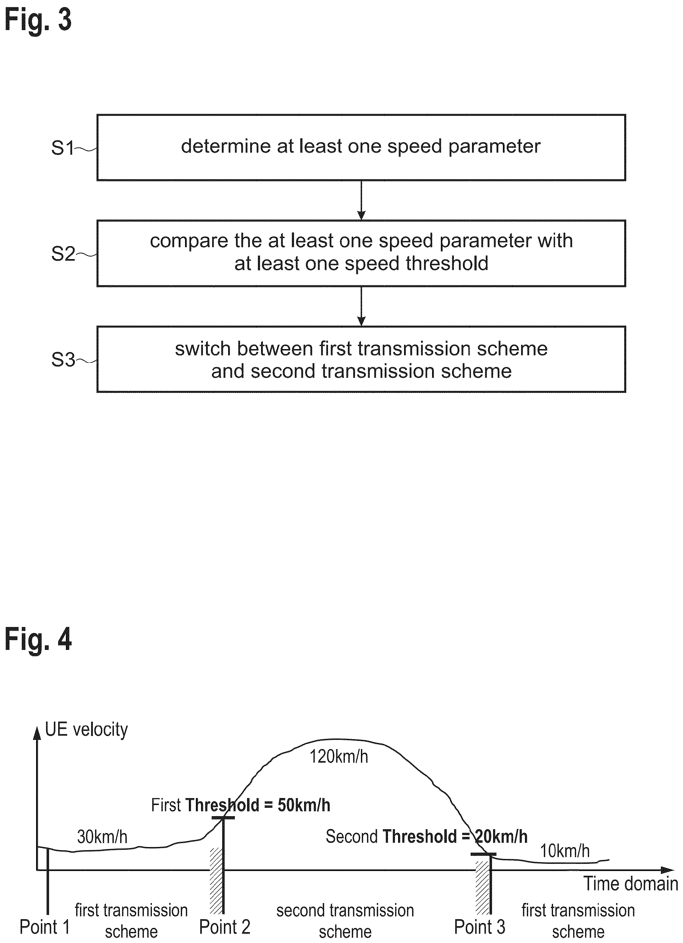

The communication system 10 is configured to perform a speed-based transmission scheme switching method that is described hereinafter with reference to Figure 3.

At least one speed parameter is determined by the speed analysis module 22 of the transmitter node 12 and/or by the speed analysis module 24 of the receiver node 14 (step S1).

In general, the at least one speed parameter is indicative of a relative speed between the transmitter node 12 and the receiver node 14.

More precisely, the at least one speed parameter determined may comprise a speed of the transmitter node 12, a speed of the receiver node 14, and/or a relative speed between the transmitter node 12 and the receiver node 14.

For example, the speed analysis modules 22, 24 may comprise a GNSS module that is configured to derive the at least one speed parameter from a GNSS location of the transmitter node 12 and/or of the receiver node 14 obtained by the respective GNSS module.

As another example, the speed analysis modules 22, 24 may be configured to determine the at least one speed parameter based on a Doppler shift of RF signals exchanged between the transmitter node 12 and the receiver node 14, particularly based on a Doppler shift of a pilot signal having a known frequency.

In another example, the speed analysis modules 22, 24 may be configured to identify the at least one speed parameter from an application layer and/or an implementation algorithm.

The at least one speed parameter determined is compared with at least one speed threshold by the respective speed analysis module 22, 24 (step S2).

In a specific exemplary embodiment, the at least one speed parameter determined is compared with a first speed threshold and with a second speed threshold, wherein the first speed threshold is greater than the second speed threshold.

If at least one comparison criterion is met in step S2, a switch between the first transmission scheme being associated with a lower range of the at least one speed parameter and the second transmission scheme being associated with a higher range of the at least one speed parameter is performed (step S3).

More precisely, if the at least one speed parameter determined crosses the first speed threshold from below, a switch from the first transmission scheme to the second transmission scheme is performed.

If the at least one speed parameter determined crosses the second speed threshold from above, a switch from the second transmission scheme to the first transmission scheme is performed.

An exemplary case is illustrated in Figure 4, which shows a diagram of a UE velocity plotted against time. In this case, for example, the transmitter node 12 may be the UE device, while the receiver node 14 may be a stationary base station. Accordingly, the at least one speed parameter may be the velocity of the transmitter node 12.

In a first time interval between "Point 1" and "Point 2", the at least one speed parameter is about 30 km/h, and is above the second speed threshold, which is exemplarily set to 20 km/h.

However, as the at least one speed parameter is smaller than the first speed threshold, which is exemplarily set to 50 km/h, the transmission scheme used by the transmitter node 12 and the receiver node 14 is not switched.

At "Point 2", the at least one speed parameter crosses the first speed threshold from below, and the transmission scheme used by the transmitter node 12 and the receiver node 14 is switched to the second transmission scheme.

At "Point 3", the at least one speed parameter crosses the second speed threshold from above, and the transmission scheme used by the transmitter node 12 and the receiver node 14 is switched to the first transmission scheme.

It is noted that the transmission scheme is not switched back to the first transmission scheme when the at least one speed parameter crosses the first speed threshold from above.

The switching from the first transmission scheme to the second transmission scheme may be initiated according to one of three variants.

According to a first variant, the transmitter node 12 and the receiver node 14 may both automatically switch between the first transmission scheme and the second transmission scheme based on the at least one speed parameter determined.

Therein, the at least one speed parameter may be determined by the receiver node 14 and/or by the transmitter node 12.

If the at least one speed parameter is determined only by the receiver node 14, the at least one speed parameter may be transmitted to the transmitter node 12 by the receiver node 14.

If the at least one speed parameter is determined only by the transmitter node 12, the at least one speed parameter may be transmitted to the receiver node 14 by the transmitter node 12.

According to a second variant, the transmitter node 12 initiates the switching between the first transmission scheme and the second transmission scheme. Accordingly, the transmitter node 12 decides whether the transmission scheme is to be switched.

The transmitter node 12 may transmit a scheme switching instruction message to the receiver node 14, and the receiver node 14 may switch between the first transmission scheme and the second transmission scheme based on the scheme switching instruction message.

According to a third variant, the receiver node 14 initiates the switching between the first transmission scheme and the second transmission scheme. Accordingly, the receiver node 14 decides whether the transmission scheme is to be switched.

The receiver node 14 may transmit a scheme switching instruction message to the transmitter node 12, and the transmitter node 12 may switch between the first transmission scheme and the second transmission scheme based on the scheme switching instruction message.

It is noted that, after switching from the first transmission scheme to the second transmission scheme or vice versa, if the receiver node 14 or the transmitter node 12 detects a worse communication performance, the receiver node 14 or the transmitter node 12 may initiate a switch back to the previous transmission scheme.

The first speed threshold may be chosen based on a comparison of the performance of the transmitter node 12 and/or of the receiver node 14 at different speeds using the first transmission scheme and the second transmission scheme.

More precisely, the first speed threshold may be chosen such that the second transmission scheme provides better performance than the first transmission scheme if the at least one speed parameter is above the first speed threshold.

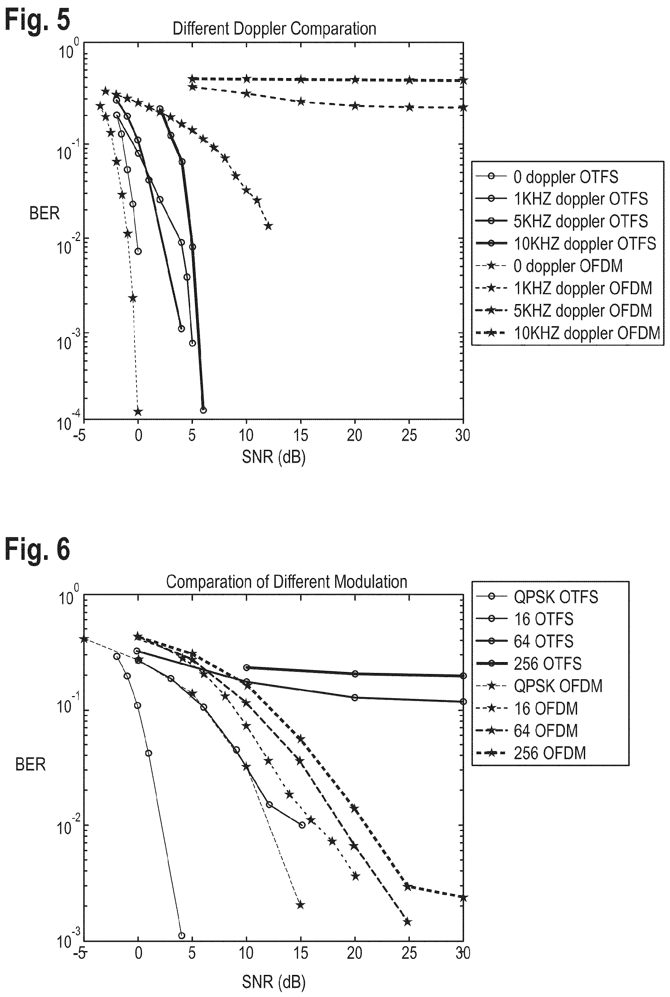

This is exemplarily illustrated in Figure 5, which shows a comparison of the bit error rate (BER) obtained with an OFDM scheme and an OTFS scheme at different Doppler shifts (i.e. at different relative velocities) over a signal-to-noise-ratio (SNR).

Likewise, the second speed threshold may be chosen such that the first transmission scheme provides better performance than the second transmission scheme if the at least one speed parameter is below the second speed threshold.

The first speed threshold and/or the second speed threshold may be determined according to a radio resource control (RRC) protocol.

As is illustrated in Figures 5 and 6, the performance of the second transmission scheme may be better than the performance of the first transmission scheme only if the second transmission scheme is restricted with respect to modulation order and/or coding rate.

In fact, in the second transmission scheme, the modulation order may be restricted to be smaller than or equal to a predefined modulation order threshold.

Alternatively or additionally, in the second transmission scheme, the coding rate may be restricted to be smaller than or equal to a predefined coding rate threshold.

As a result, while a full modulation coding scheme, MCS, table may be utilized in the first transmission scheme, an adapted MCS table or a reduced MCS table may be utilized in the second transmission scheme.

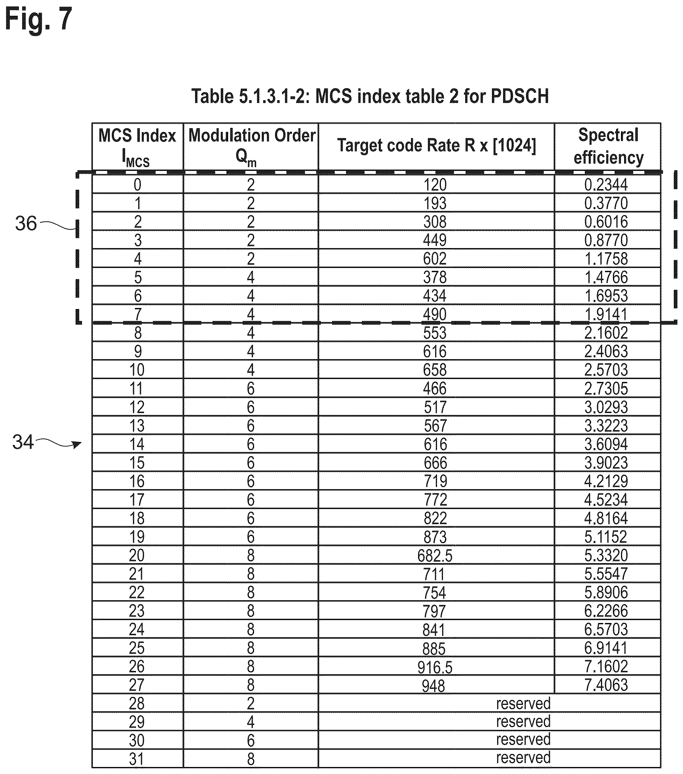

An exemplary case is illustrated in Figure 7, which shows an exemplary MCS table 34 comprising a plurality of combinations of modulation schemes (or rather modulation orders) and coding rates that can be employed by the transmitter node 12 and the receiver node 14 in the first transmission scheme.

In the second transmission scheme, only a subset 36 of the MCS table 34 may be allowed, wherein the subset 36 is restricted to the predefined modulation order threshold and to the predefined coding rate threshold.

Further, in the second transmission scheme, only continuous resource allocation in frequency domain may be utilized. Accordingly, no blanks may be inserted between the subcarriers allocated to the second transmission scheme.

Likewise, there may be no subcarriers allocated to a different transmission scheme between two subcarriers allocated to the second transmission scheme, particularly no subcarriers allocated to the first transmission scheme.

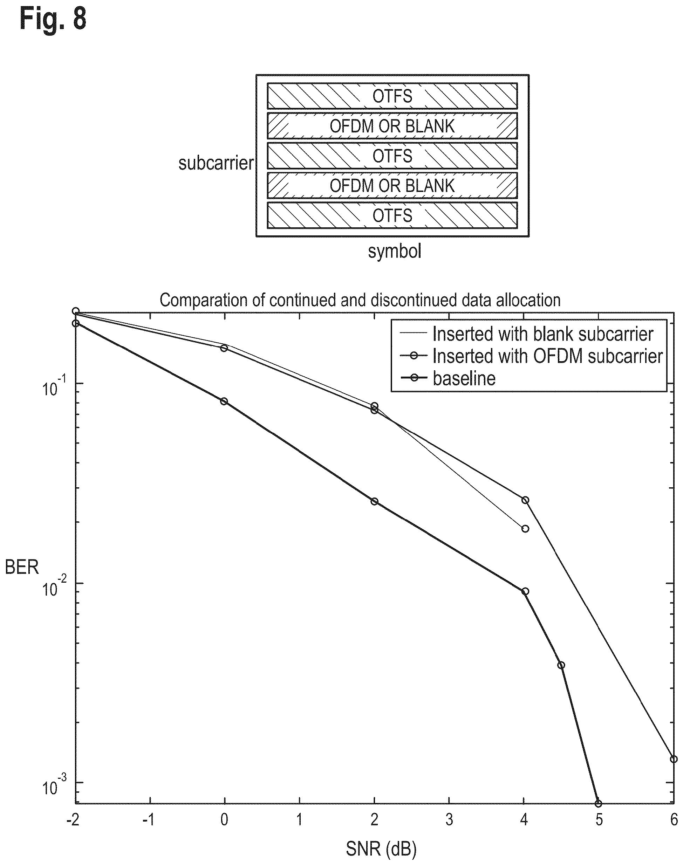

A comparison of the performance for continuous resource allocation with noncontinuous allocation cases is illustrated in Figure 8.

Therein, the "baseline" curve corresponds to the continuous resource allocation, and the other two curves correspond to blank subcarriers or OFDM subcarriers being provided in between the OTFS subcarriers.

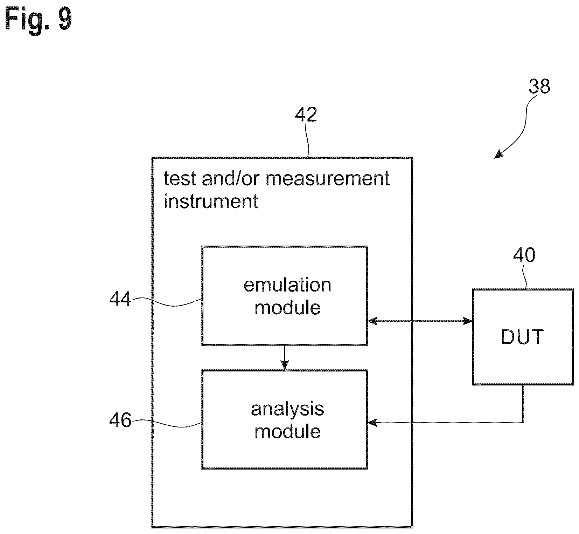

Figure 9 schematically shows a test and/or measurement system 38 being configured to perform tests and/or measurements on a device under test (DUT) 40.

Therein, the device under test 40 may, for example, be the transmitter node 12 or the receiver node 14 according to any one of the variants described above.

In fact, the test and/or measurement system 38 comprises a test and/or measurement instrument 42 with an emulation module 44 and an analysis module 46.

It is noted that while both the emulation module 44 and the analysis module 46 are shown to be integrated into the test and/or measurement instrument 42 in Figure 9, the emulation module 44 or the analysis module 46 may alternatively be established separately from the test and/or measurement instrument 42.

The emulation module 44 is configured to emulate the transmitter node 12 and/or the receiver node 14 described above for performing tests on the device under test 40.

In other words, the emulation module 44 is configured to perform the speed-based transmission scheme switching method described above in conjunction with the device under test 40.

Therein, the emulation module 44 may emulate a speed of the emulated receiver node or transmitter node by, for example, providing appropriate GNSS data or by applying an appropriate Doppler shift to signals transmitted to the device under test 40 and/or to signals received from the device under test.

The analysis module 46 is connected to the emulation module 44 and to the device under test 40.

The analysis module is configured to determine at least one performance parameter of the device under test 40 based on signals received from the emulation module 44 and/or from the device under test 40.

In general, the at least one performance parameter is associated with the device under test 40 switching between the first transmission scheme and the second transmission scheme

For example, the at least one performance parameter may comprise a bit error rate, a symbol error rate, a signal-to-noise ratio, a switching time taken by the device under test 40 to switch between the transmission schemes, and/or a parameter indicating whether the switch between the transmission schemes has been performed correctly by the device under test 40.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

**Claims**

1. A speed-based transmission scheme switching method of switching a transmission scheme between a transmitter node (12) and a receiver node (14), the method comprising the steps of

   - determining at least one speed parameter, wherein the at least one speed parameter comprises a speed of the transmitter node (12), a speed of the receiver node (14), and/or a relative speed between the transmitter node (12) and the receiver node (14); and
   - switching, based on the at least one speed parameter determined, between a first transmission scheme being associated with a lower range of the at least one speed parameter and a second transmission scheme being associated with a higher range of the at least one speed parameter.

2. The speed-based transmission scheme switching method of claim 1, wherein a switch from the first transmission scheme to the second transmission scheme is performed if the at least one speed parameter determined is greater than a first speed threshold.

3. The speed-based transmission scheme switching method of claim 1 or 2, wherein a switch from the second transmission scheme to the first transmission scheme is performed if the at least one speed parameter determined is smaller than a second speed threshold.

4. The speed-based transmission scheme switching method of claims 2 and 3, wherein the first speed threshold is greater than the second speed threshold.

5. The speed-based transmission scheme switching method according to any one of the preceding claims, wherein the first transmission scheme is an orthogonal frequency division multiplexing, OFDM, scheme.

6. The speed-based transmission scheme switching method according to any one of the preceding claims, wherein the second transmission scheme is an orthogonal time-frequency-space, OTFS, scheme or a orthogonal time-frequency multiplexing, OTFM, scheme.

7. The speed-based transmission scheme switching method according to any one of the preceding claims, wherein a full modulation coding scheme, MCS, table is utilized in the first transmission scheme.

8. The speed-based transmission scheme switching method according to any one of the preceding claims, wherein an adapted modulation coding scheme, MCS, table is utilized in the second transmission scheme.

9. The speed-based transmission scheme switching method of claim 8, wherein the adapted MCS table is a reduced version of a full MCS table or a separate MCS table having different properties compared to the full MCS table.

10. The speed-based transmission scheme switching method according to any one of the preceding claims, wherein only continuous resource allocation in frequency domain is utilized in the second transmission scheme.

11. The speed-based transmission scheme switching method according to any one of the preceding claims, wherein both the transmitter node (12) and the receiver node (14) automatically switch between the first transmission scheme and the second transmission scheme based on the at least one speed parameter determined.

12. The speed-based transmission scheme switching method according to any one of claims 1 to 10, wherein the transmitter node (12) initiates the switching between the first transmission scheme and the second transmission scheme.

13. The speed-based transmission scheme switching method according to any one of claims 1 to 10, wherein the receiver node (14) initiates the switching between the first transmission scheme and the second transmission scheme.

14. A communication system, the communication system (10) comprising a transmitter node (12) and a receiver node (14), wherein the communication system (10) is configured to perform the speed-based transmission scheme switching method according to any one of the preceding claims.

15. A test and/or measurement system, the test and/or measurement system (38) comprising an emulation module (44) and an analysis module (46), wherein the emulation module (44) is configured to emulate a transmitter node (12) or a receiver node (14) in order to perform tests and/or measurements on a device under test (40),

wherein the emulation module (44) is configured to perform the speed-based transmission scheme switching method according to any one of claims 1 to 13 in conjunction with the device under test (40), and
wherein the analysis module (46) is configured to determine at least one performance parameter of the device under test (40), wherein the at least one performance parameter is associated with the device under test (40) switching between the first transmission scheme and the second transmission scheme.

**Fig. 1**

**Fig. 2**

# Fig. 3

S1 — | determine at least one speed parameter |

S2 — | compare the at least one speed parameter with at least one speed threshold |

S3 — | switch between first transmission scheme and second transmission scheme |

# Fig. 4

UE velocity

120km/h

First **Threshold** = 50km/h

30km/h

Second **Threshold** = 20km/h

10km/h

Time domain

Point 1

first transmission scheme

Point 2

second transmission scheme

Point 3

first transmission scheme

# Fig. 5

Different Doppler Comparation

BER / SNR (dB)

- 0 doppler OTFS
- 1KHZ doppler OTFS
- 5KHZ doppler OTFS
- 10KHZ doppler OTFS
- 0 doppler OFDM
- 1KHZ doppler OFDM
- 5KHZ doppler OFDM
- 10KHZ doppler OFDM

# Fig. 6

Comparation of Different Modulation

BER / SNR (dB)

- QPSK OTFS
- 16 OTFS
- 64 OTFS
- 256 OTFS
- QPSK OFDM
- 16 OFDM
- 64 OFDM
- 256 OFDM

# Fig. 7

Table 5.1.3.1-2: MCS index table 2 for PDSCH

| MCS Index $I_{MCS}$ | Modulation Order $Q_m$ | Target code Rate R x [1024] | Spectral efficiency |
|---|---|---|---|
| 0 | 2 | 120 | 0.2344 |
| 1 | 2 | 193 | 0.3770 |
| 2 | 2 | 308 | 0.6016 |
| 3 | 2 | 449 | 0.8770 |
| 4 | 2 | 602 | 1.1758 |
| 5 | 4 | 378 | 1.4766 |
| 6 | 4 | 434 | 1.6953 |
| 7 | 4 | 490 | 1.9141 |
| 8 | 4 | 553 | 2.1602 |
| 9 | 4 | 616 | 2.4063 |
| 10 | 4 | 658 | 2.5703 |
| 11 | 6 | 466 | 2.7305 |
| 12 | 6 | 517 | 3.0293 |
| 13 | 6 | 567 | 3.3223 |
| 14 | 6 | 616 | 3.6094 |
| 15 | 6 | 666 | 3.9023 |
| 16 | 6 | 719 | 4.2129 |
| 17 | 6 | 772 | 4.5234 |
| 18 | 6 | 822 | 4.8164 |
| 19 | 6 | 873 | 5.1152 |
| 20 | 8 | 682.5 | 5.3320 |
| 21 | 8 | 711 | 5.5547 |
| 22 | 8 | 754 | 5.8906 |
| 23 | 8 | 797 | 6.2266 |
| 24 | 8 | 841 | 6.5703 |
| 25 | 8 | 885 | 6.9141 |
| 26 | 8 | 916.5 | 7.1602 |
| 27 | 8 | 948 | 7.4063 |
| 28 | 2 | reserved | |
| 29 | 4 | reserved | |
| 30 | 6 | reserved | |
| 31 | 8 | reserved | |

36

34

# Fig. 8

Comparation of continued and discontinued data allocation

# Fig. 9

| | Europäisches Patentamt European Patent Office Office européen des brevets | **EUROPEAN SEARCH REPORT** | **Application Number** EP 25 20 8554 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/134680 A1 (CENTRE OF EXCELLENCE IN WIRELESS TECH [IN] ET AL.) 27 June 2024 (2024-06-27) * paragraphs [0080] - [0082] * ----- | 1-15 | INV. H04L1/00 |
| X | WO 2022/188982 A1 (VOLKSWAGEN AG [DE]; FRAUNHOFER GES FORSCHUNG [DE]) 15 September 2022 (2022-09-15) * section IV; pages 2,11 * ----- | 1-15 | |
| X | US 2007/066242 A1 (YI BYOUNG-HA [KR] ET AL) 22 March 2007 (2007-03-22) * paragraphs [0055] - [0059]; figure 5 * ----- | 1-15 | |
| | | | **TECHNICAL FIELDS SEARCHED (IPC)** H04L |

The present search report has been drawn up for all claims

| Place of search | Date of completion of the search | Examiner |
|---|---|---|
| Munich | 20 March 2026 | Flores Sanchez, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 8554

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2026

| Patent document cited in search report | Publication date | Patent family member(s) | Publication date |
|---|---|---|---|
| WO 2024134680 A1 | 27-06-2024 | NONE | |
| WO 2022188982 A1 | 15-09-2022 | EP 4305818 A1<br>WO 2022188982 A1 | 17-01-2024<br>15-09-2022 |
| US 2007066242 A1 | 22-03-2007 | KR 20070033115 A<br>US 2007066242 A1 | 26-03-2007<br>22-03-2007 |

EPO FORM P0459

For more details about this annex : see Official Journal of the European Patent Office, No. 12/82